# EUROPEAN PATENT APPLICATION

(11) **EP 2 410 591 A1**
(43) Date of publication of application: **25.01.2012**
(21) Application number: 10186775.2
(22) Date of filing: 06.10.2010
(51) Int. Cl.: H01M 2/10, H01M 10/48, H01M 10/50

(54) **Storage battery for vehicle**

(30) Priority: 23.07.2010 TW 099214046
(71) Applicant: Exa Energy Technology Co., Ltd., Taichung City 407 (TW)
(72) Inventor: Jan, Yihsong, Taipei City (TW); Hsia, Chang-Fu, 432, Taichung County Chinese Taipei (TW)
(74) Representative: Lang, Christian

(57) **Abstract**

A storage battery of the present invention includes a cell, a heater, a controller and a switch. The cell, heater and the controller are series-wound, so that a heating circuit is defined. The switch is connected with the controller, being operated for turning the controller on or off. The controller can sense the temperature of the cell. The controller closes the heating circuit when the temperature of the cell is low. The heater heats the cell when the heating circuit is closed.

Therefore, the storage battery is adapted for a vehicle to be equipped therewith. The temperature of the cell can be raised by the heater. As such, even though the temperature of surroundings is low, the cell can keep an effective discharge efficiency to start the engine.

## Description

### BACKGROUND OF THE INVENTION

### Field of the Invention

The present invention relates to a storage battery, and more particularly to a storage battery which can operate a starter motor to start an engine of a vehicle.

### Description of the Prior Art

Storage batteries are used for operating starter motors of vehicles. The discharge efficiency of the batteries or cells is highly related to the temperature of the batteries or cells. If the temperature is low, the discharge efficiency is also low. The starter motor can be hardly operated. As a result, the engine can not be started.

The present invention is, therefore, arisen to obviate or at least mitigate the above mentioned disadvantages.

### SUMMARY OF THE INVENTION

The main object of the present invention is to provide a storage battery for a vehicle. No mater how cold it is, the storage battery can keep effective discharge efficiency.

To achieve the above and other objects, a storage battery for a vehicle of the present invention includes a case, at least one cell, a heater, a controller and a switch. The vehicle has an electronic control unit. The case includes a shell and two terminals. Each terminal is firmly disposed on the shell. Each terminal is electrically conductive. The cell is firmly disposed in the shell. The cell has two poles. Each pole connects with one of the terminals. The heater is firmly disposed on the shell. The heater is adapted for the cell to apply electric energy thereto, so that the cell can be heated by the heater. The controller, the cell and the heater are series-wound. A heating circuit is defined by the controller, the cell and the heater. The heater circuit is broken when the controller is turned off. The controller senses a temperature of the cell when the controller is turned on. The heating circuit is closed when the temperature of the cell is lower than a predetermined temperature. The heating circuit is broken when the temperature of the cell is higher than the predetermined temperature. The switch is connected with the controller. The switch is operated for turning the controller on or off.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a profile showing a first embodiment of the present invention;
Fig. 2 is a profile showing a second embodiment of the present invention;
Fig. 3 is a flow chart of the present invention.

### DETAILED DESCRIPTION OF THE PREFERRED EMBODIMENTS

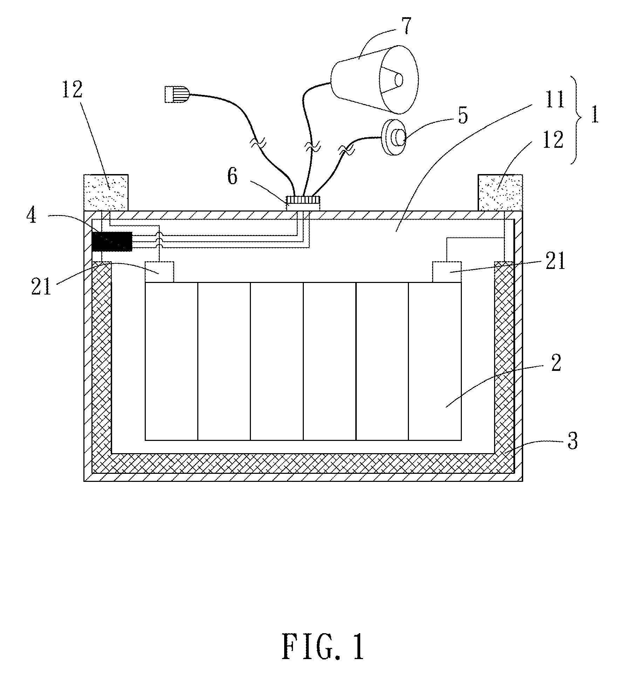

Please refer to Fig. 1 for a first embodiment of the present invention. The storage battery of the present embodiment is provided for vehicles. An engine of a vehicle can be started by the storage battery and a starter motor. The vehicle has an electronic control unit for controlling combination meter, amplifier and starter motor of a vehicle. The electronic control unit generates a breaking signal when a user locks the vehicle or starts the engine.

The storage battery of the present invention includes a case 1, at least one cell 2, a heater 3, a controller 4 and a switch 5. The storage battery may further include a signal joint 6 and an arresting device 7.

The case 1 includes a shell 11 and two terminals 12. Each terminal 12 is firmly disposed on the shell 11. Each terminal 12 is electrically conductive. As such, the terminals 12 can be connected to an electric power circuit of the vehicle.

The cell 2 is firmly disposed in the shell 11. The cell 2 has two poles 21. Each pole 21 is connected with one of the terminals 12. A plurality of cells may be disposed in the shell 11. The cells may be in series and/or parallel connected with each other. The cells may include a plurality of types of cells, such as lead batteries or lithium iron phosphate batteries.

The heater 3 can transform electric energy into thermal energy. In general, the heater 3 may be an electric heater made of metal or plastic. The heater 3 may be disposed in the shell 11 or on the shell 11. Preferably, the heater 3 can be plastered on the cell 2.

The controller 4 connects the cell 2 to the heater 3. The controller 4, the cell 2 and the heater 3 are series-wound. A heating circuit is defined by the controller 4, the cell 2 and the heater 3. As such, the controller 4 is able to close or to break the heating circuit. When the heating circuit is closed, electric power of the cell 2 transmits to the heater 3 to be transformed into thermal energy. The controller 4 can be turned on or be turned off. When the controller 4 is turned off, the heating circuit is broken. When the controller 4 is turned on, the controller 4 senses a temperature of the cell 2. The controller 4 compares the temperature of the cell 2 to a predetermined temperature. If the temperature of the cell 2 is lower than the predetermined temperature, the heating circuit will be closed. If the temperature of the cell 2 is higher than the predetermined temperature, the heating circuit will be broken. In some possible embodiments of the present invention, the predetermined temperature may be an exact temperature which is between 0°C and 45°C, or a temperature range between 0°C and 45°C.

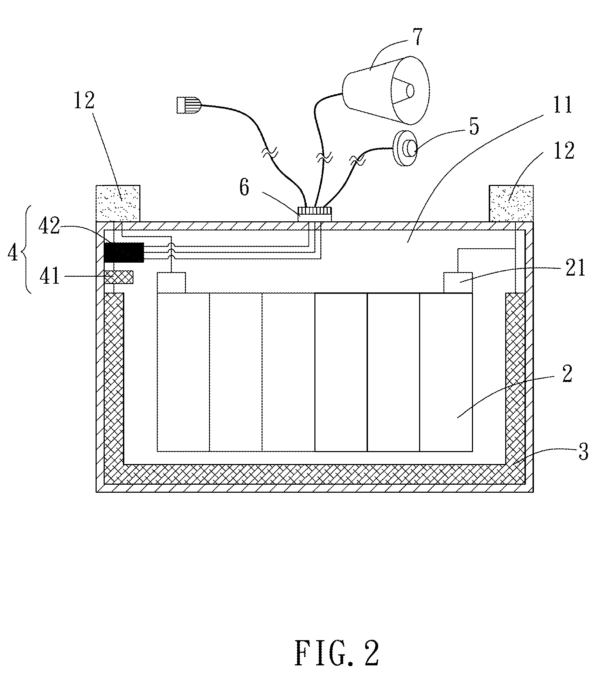

More specifically, the controller 4 may include a board. The board has a controlling circuit. The controlling circuit includes a temperature sensor. The temperature sensor detects the temperature of the cell 2. The controlling circuit is able to compare the temperature of the cell 2 to the predetermined temperature, and is able to close or break the heating circuit. Please refer to Fig. 2. In another embodiment of the present invention, the controller 4 may include a thermocouple 41 and a board 42. The thermocouple 41 is located by the cell 2, so that the temperature of the thermocouple 41 is close to the temperature of the cell 2. The thermocouple 41 closes the heating circuit when its temperature is lower than the predetermined temperature. The thermocouple 41 breaks the heating circuit when its temperature is higher than the predetermined temperature. The board may also have a controlling circuit, which is adapted to be turned on or off.

The switch 5 is connected with the controller 4. The switch 5 can be operated for turning the controller on or off. Preferably, the switch 5 can be firmly disposed is the vehicle.

The signal joint 6 is firmly disposed on the shell 11. The signal joint 6 is connected with the controller 4. The signal joint 6 is adapted for electronic control unit of the vehicle to be connected therewith. In the embodiment of the present invention, the signal joint 6 connects the switch 5 to the controller 4. In other possible embodiments of the present invention, the switch may be connected with the controller 4 directly. The signal joint 6 feeds the breaking signal to the controller 4 when the signal joint 6 receives the breaking signal from the electronic control unit. The controller 4 breaks the heating circuit when it receives the breaking signal. As such, the electric power generated by the cell 2 can be prevented from being excessively divided.

The arresting device 7 is connected with the signal joint 6. The arresting device 7 is adapted for the vehicle to be equipped therewith. The arresting device 7 receives an arresting signal, which is generated by the controller 4 when the heating circuit is broken. Practically, the arresting device 7 may be a light or an amplifier.

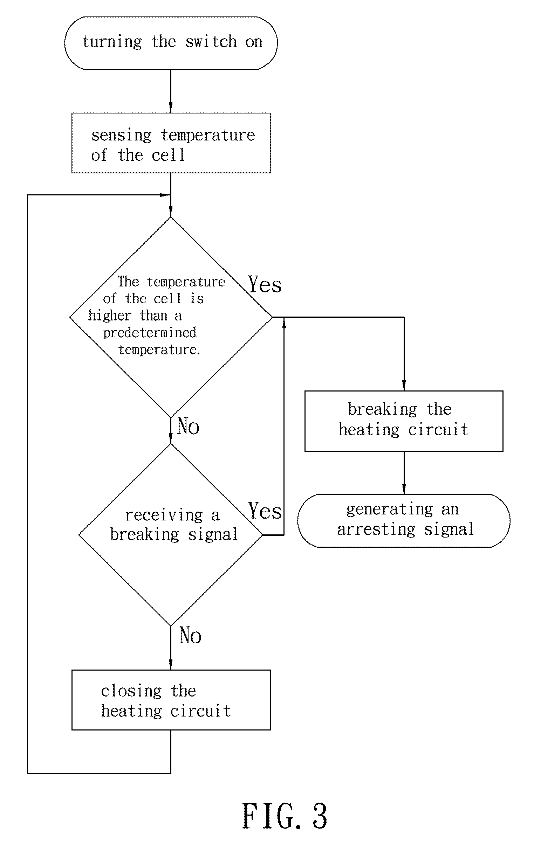

Accordingly, refer to Fig. 1 and Fig. 3, the storage battery can be assembled in vehicles. When the temperature of the surrounding is low, the discharge efficiency of the cell 2 is descended. Users may operate the switch 5 to turn the controller 4 on. The controller 4 senses the temperature of the cell 2 and heats the cell 2 with the heater 3. At the moment, if users start the engine or lock the vehicle, the electronic control unit will generate the breaking signal. The controller 4 receives the breaking signal, and breaks the heating circuit. When the temperature of the cell 2 is raised to the predetermined temperature, the controller 4 also breaks the heating circuit. Moreover, the arresting device 7 is operated by the controller 4 to tell the user that the heating circuit is broken. As such, even though the temperature of the surrounding is too low to start the engine, the storage battery of the present invention can keep plenty discharge efficiency to operate the starter motor.

## Claims

1. A storage battery for a vehicle, wherein the vehicle has an electronic control unit, the storage battery comprising:
a case (1), comprising a shell (11) and two terminals (12), each terminal (12) being firmly disposed on the shell (11), each terminal (12) being electrically conductive;
at least a cell (2), firmly disposed in the shell (11), the cell (2) having two poles (21), each pole (21) beingconnected with one of the terminals (12);
a heater (3), firmly disposed on the shell (11), the heater (3) being adapted for the cell (2) to apply electric energy thereto, so as to heat the cell (2);
a controller (4), the controller (4), the cell (2) and the heater (3) being series-wound, a heating circuit being defined by the controller (4), the cell (2) and the heater (3), the heating circuit being broken when the controller (4) being turned off, the controller (4) sensing a temperature of the cell (2) when the controller (4) being turned on, the heating circuit being closed when the temperature of the cell (2) being lower than a predetermined temperature, the heating circuit being broken when the temperature of the cell (2) being higher than the predetermined temperature;
a switch (5), connecting with the controller (4), the switch (5) being operated for turning the controller (4) on/off.

2. The storage battery of claim 1, further comprising a signal joint (6), the signal joint (6) being firmly disposed on the shell (11), the signal joint (6) being connected with the controller (4), the signal joint (6) being adapted for the electronic control unit to connect therewith, the signal joint (6) feeding a breaking signal to the controller when the signal joint (6) receives the breaking signal from the electronic control unit, the heating circuit being broken by the controller (4) when the controller (4) receives the breaking signal.

3. The storage battery of claim 2, further comprising an arresting device (7), the arresting device (7) being connected with the signal joint (6), the arresting device (7) being adapted for the vehicle to be equipped therewith, the controller (4) generating an arresting signal when the heating circuit is broken, the arresting signal being fed to the arresting device (7).

4. The storage battery of claim 1, wherein the controller (4) comprises a board (42), the board (42) has a controlling circuit, the controlling circuit comprises a temperature sensor, the temperature sensor detects the temperature of the cell (2), the controlling circuit compares the temperature of the cell (2) and the predetermined temperature, as a criterion for breaking the heating circuit selectively.

5. The storage battery of claim 4, wherein the controller (4) comprises a thermocouple (41) and a board (42), the thermocouple (41) closes the heating circuit when its temperature is lower than the predetermined temperature, the thermocouple (41) breaks the heating circuit when its temperature is higher than the predetermined temperature.
